# EUROPÄISCHE PATENTSCHRIFT

(11) **EP 1 433 189 B1**
(45) Veröffentlichungstag und Bekanntmachung des Hinweises auf die Patenterteilung: **30.11.2005**
(21) Anmeldenummer: 02764890.6
(22) Anmeldetag: 27.09.2002
(51) Int. Cl.: H01H 21/50, G05G 1/06

(54) **SCHALTEINRICHTUNG**
SWITCHING DEVICE
DISPOSITIF DE COMMUTATION

(30) Priorität: 01.10.2001 DE 10148554; 11.12.2001 DE 10160801
(43) Veröffentlichungstag der Anmeldung: 30.06.2004
(73) Patentinhaber: Leopold Kostal GmbH & Co. KG, 58507 Lüdenscheid (DE)
(72) Erfinder: HEINZE, Ralf, 58515 Lüdenscheid (DE); LADWIG, Diethelm, 58339 Breckerfeld (DE); HIRSCHFELD, Klaus, 58515 Lüdenscheid (DE)
(86) Internationale Anmeldenummer: PCT/EP2002/010869
(87) Internationale Veröffentlichungsnummer: WO 2003/030197

(56) Entgegenhaltungen:
- EP-A- 0 255 418
- DE-A- 19 540 039
- DE-C- 3 839 911

## Beschreibung

Die Erfindung betrifft eine Schalteinrichtung mit einem in Richtung seiner Längserstreckung in einem Rastbolzengehäuse beweglich gelagerten und durch eine Rastfeder gegen eine Schaltkulisse unter axialer Vorspannung gehaltenen Rastbolzen, welcher mehrere über seinen Umfang verteilt angeordnete, außenseitig abragende und an der Innenseite des Rastbolzengehäuses unter radialer Vorspannung anliegende Führungsmittel aufweist.

Anordnungen bestehend aus einem Rastbolzengehäuse und einem Rastbolzen, der in dem Rastbolzengehäuse in seiner Längserstreckung beweglich gelagert ist, werden zur Darstellung von Schaltpunkten bei elektrischen Schalteinrichtungen eingesetzt. Der Rastbolzen selbst stützt sich bei einer solchen Schalteinrichtung in einer Schaltkulisse ab und ist darin geführt. Die Abstützung des Rastbolzens in der Schaltkulisse erfolgt federbelastet. Zu diesem Zweck ist zwischen dem Rastbolzen und dem Rastbolzengehäuse ein Federelement angeordnet. Ein Rastbolzen besteht in aller Regel aus einem zylindrischen Schaft, dessen freies Ende - zum Eingreifen in die Schaltkulisse eine Spitze ausbildend - konisch verjüngt ist. Entsprechend der zylindrischen Ausgestaltung des Schaftes des Rastbolzens ist das Rastbolzengehäuse konzipiert und weist im allgemeinen einen zylindrischen Führungskanal auf. Um eine einwandfreie Führung des Rastbolzens in einer Schaltkulisse und eine Schaltstellungsfixierung in bestimmten Schaltpunkten nahe der Schaltkulisse gewährleisten zu können, ist es wesentlich, daß der Rastbolzen auch bei Anliegen von auf den Rastbolzen bei einer Betätigung der Schalteinrichtung wirkenden Querkräften längsaxial zum Rastbolzengehäuse bewegbar ist und bewegbar bleibt. Möglich ist dies jedoch nur mit einem möglichst optimal eingestellten Spiel, mit dem der Rastbolzen in dem Rastbolzengehäuse gelagert ist. Ist das Spiel zu gering bemessen, besteht die Gefahr, daß der Rastbolzen in dem Rastbolzengehäuse verklemmt. Bei zu großem Spiel zwischen dem Rastbolzen und dem Rastbolzengehäuse ist zwar das Problem des Verklemmens des Rastbolzens in dem Rastbolzengehäuse zumindest weitestgehend vermieden, jedoch weist die mit einer solchen Anordnung ausgerüstete Schalteinrichtung ein solches Spiel beim Betätigen der Schalteinrichtung auf, daß aus diesem Grunde ein sicheres Schalten mitunter nicht mehr möglich ist. Im übrigen ist es unerwünscht, Schalteinrichtungen einsetzen zu müssen, deren Schalthebel zur Gewährleistung einer Funktionsfähigkeit der Schalteinrichtung beim Schalten ein übergroßes Spiel aufweisen.

Zur Vermeidung dieser Nachteile sind Rastbolzen entwickelt worden, die zur Führung des Rastbolzens in dem Rastbolzengehäuse im Bereich einer zylindrischen Materialverdickung einen Teflonring zur Reibungsminimierung und somit zum Vorbeugen gegen eine Verklemmen tragen. Der Rastbolzen selbst ist aus Metall hergestellt, damit eine bei Kunststoff ansonsten sich einstellendes, feuchtigkeitsbedingtes Aufquellen nicht auftreten kann. Ein solcher Rastbolzen ist jedoch aufwendig in seiner Herstellung, da die miteinander zusammenwirkenden Teile möglichst nur kleine Toleranzen aufweisen sollen. Im ungünstigen Fall ist der Rastbolzen sehr stramm in dem Rastbolzengehäuse geführt. Dem könnte durch Einsatz entsprechend stark konzipierter Federn entgegengewirkt werden.

Durch die EP 255 418 B1 ist eine Schalteinrichtung gemäß dem Oberbegrif der unabhängigen Patentansprüche bekannt geworden. Bei dieser Schalteinrichtung ist ein in Richtung seiner Längserstreckung in einer Aufnahmebohrung beweglich gelagerter und durch eine Feder gegen eine Indexiemockenvorrichtung unter Vorspannung gehaltener Indexierstößel mit außenseitig abragenden Vorsprüngen versehen, welche über seinen Umfang verteilt angeordnet sind. Zur Erreichung einer Nachgiebigkeit im Bereich der Vorsprünge sind in dem Stößel diesen zugeordnet Materialausnehmungen vorhanden, so daß im Bereich der Vorsprünge weiche dünnwandige Stützteile gebildet sind. Die Auflage der Vorsprünge an der Innenseite der Aufnahmebohrung ist dabei in Richtung der Längserstreckung des Stößels praktisch punktförmig, so daß es, um ein Verkanten des Indexierstößels zu verhindern, praktisch unerläßlich ist, zumindest zwei in Längsrichtung beabstandet zueinander angeordnete Auflagepunkte vorzusehen. Die Realisierung der weichen, dünnwandigen Stützteile durch Materialausnehmungen im Bereich der Vorsprünge ist insbesondere für die hier dargestellte, mit einem rechteckigen Querschnitt versehene Ausführung des Indexierstößels geeignet. Bei den ebenfalls sehr gebräuchlichen mit einem runden Querschnitt versehenen Stößeln wird insbesondere die Realisierung ausreichend genau definierter Auflagekräfte zu Problemen führen.

Ausgehend von diesem diskutierten Stand der Technik liegt der vorliegenden Erfindung die Aufgabe zugrunde, eine solche Schalteinrichtung dergestalt weiterzubilden, daß eine verklemmfreie und zumindest weitestgehend spielfreie Führung insbesondere auch eines runden Rastbolzens in dem Rastbolzengehäuse unter Einsatz einfach zu realisierender Mittel gewährleistet ist.

Diese Aufgabe wird erfindungsgemäß zum einen dadurch gelöst, daß die Führungsmittel durch in Längserstreckung des Rastbolzens ausgerichtete, biegeweiche Führungsrippen gebildet sind, durch die der Rastbolzen in seinem vorderen spitzennahen Bereich in dem Rastbolzengehäuse geführt ist.

Zum anderen wird die Aufgabe auch dadurch gelöst, daß die Führungsmittel durch hebelartig ausgebildete, in Längserstreckung des Rastbolzens (1) ausgerichtete, bewegliche Andruckarme gebildet sind, an denen jeweils ein Umlenkelement vorhanden ist, welches so mit der Rastfeder zusammenwirkt, daß der jeweilige Andruckarm in radialer Richtung gegen die Innenseite des Rastbolzengehäuses gedrückt ist.

Bei der erstgenannten Ausführungsform der erfindungsgemäßen Schalteinrichtung sind die Führungsmittel durch in Längserstreckung des Rastbolzens ausgerichtete, biegeweiche Führungsrippen gebildet, durch die der Rastbolzen in seinem vorderen spitzennahen Bereich in dem Rastbolzengehäuse geführt ist. Die Führungsrippen, die zweckmäßigerweise mit gleichem Winkelabstand zueinander angeordnet sind, erstrecken sich in Längserstreckung des Rastbolzens und liegen zur Führung des Rastbolzens an der Innenseite des Rastbolzengehäuses an. Die Führungsrippen weisen nur eine sehr kleinen Kontaktbereich mit der Innenseite der Führung des Rastbolzengehäuses auf. Zweckmäßigerweise berührt eine Führungsrippe das angrenzende Rastbolzengehäuse nur entlang einer Kontaktlinie. Die Führungsrippen selbst weisen biegeweiche Eigenschaften oder in gewissem Maße elastische Eigenschaften auf, die zweckmäßigerweise aus der Materialnachgiebigkeit bzw. aus der Materialelastizität des eingesetzten Materiales resultieren. Für eine spielfreie Führung des Rastbolzens in dem Rastbolzengehäuse ist der Bereich der Führung nahe der aus dem Rastbolzengehäuse heraustretenden Spitze des Rastbolzens entscheidend. Durch Vorsehen von biegeweichen Führungsrippen, die an der Innenseite des Rastbolzengehäuses anliegen, ist zumindest dieser Führungsabschnitt des Rastbolzens spielfrei geführt. Zur Herstellung des Rastbolzens, der zweckmäßigerweise einstückig vorgesehen ist, können die Führungsrippen aufgrund ihrer biegeweichen Eigenschaften mit einem gewissen Übermaß bezogen auf die lichte Weite der in dem Rastbolzengehäuse befindlichen Führung vorgesehen werden. Für den Fall, daß der Rastbolzen aus einem Kunststoff, etwa im Wege eines Spritzgußverfahrens hergestellt worden ist, können die zunächst unter einer gewissen Vorspannung in dem Rastbolzengehäuse eingeschobenen Führungsrippen nach einiger Zeit relaxieren, so daß ein anfänglich möglicherweise etwas strammerer Sitz nach einigen Betätigungen des Rastbolzens egalisiert worden ist. Zweckmäßig ist die Verwendung eines Kunststoffmateriales, welches neben den biegeweichen Eigenschaften der daraus gebildeten Führungsrippen ebenfalls gewisse materialelastische Eigenschaften aufweist. Damit ist gewährleistet, daß die Führungsrippen jederzeit unter geringer Vorspannung stehend an der Innenseite der Führung des Rastbolzengehäuses anliegen.

Bei der zweiten Ausführungsform der erfindungsgemäßen Schalteinrichtung sind die Führungsmittel durch hebelartig ausgebildete, bewegliche Andruckarme gebildet, an denen jeweils ein Umlenkelement vorhanden ist, welches so mit der Rastfeder zusammenwirkt, daß der jeweilige Andruckarm in radialer Richtung gegen die Innenseite des Rastbolzengehäuses gedrückt ist. Der Rastbolzen ist dadurch mit einem integrierten federbelasteten Spreizmechanismus ausgestattet, der so ausgebildet ist, daß im spitzennahen Bereich des Rastbolzens befindliche elastische Andruckarme durch die Federkraft der ohnehin zwingend vorhandenen Rastfeder radial gegen die Wandung der zugeordneten Rastbolzen-Aufnahme gedrückt werden. Ein besonderer Vorteil dieser Ausführungsform besteht darin, daß die durch die Andruckarme ausgeübte Andruckkraft stets zumindest annähemd proportional zur Federkraft der Rastfeder ist und so in kontrollierter und berechenbarer Weise durch die konstruktiver Auslegung der Andruckarme und/oder durch Auswahl einer geeigneten Rastfeder eingestellt werden kann.

In beiden Ausgestaltungsvarianten ist vorgesehen, die erfindungsgemäßen Führungsmittel lediglich in einem ersten, nahe der Spitze des Schaftes angeordneten Führungsabschnitt anzuordnen und einen weiteren Führungsabschnitt an dem der Spitze des Schaftes gegenüberliegenden Ende des Rastbolzens vorzusehen. Der Rastbolzen ist in dem Rastbolzengehäuse dann anhand dieser beiden Führungsabschnitte geführt. Der zweite Führungsabschnitt ist dabei vorzugsweise so gestaltet, daß die dort vorhandenen Führungsmittel einen Wulst aufweisen, der zweckmäßigerweise außenseitig gerundet ist. Für den Fall, daß die Führungsmittel eine gewisse Elastizität aufweisen sollen, was sicherlich zweckmäßig ist, kann dieses Ende des Rastbolzens geschlitzt ausgebildet sein, wobei der Schlitz den Wulst durchtrennt.

Unabhängig von der Ausgestaltung der Führungsmittel im hinteren Führungsabschnitt ist ein Verklemmen des Rastbolzens in dem Rastbolzengehäuse wirksam durch die im Bereich der Spitze des Rastbolzens angeordneten Führungsmittel aufgrund ihrer elastischen Eigenschaften vermieden.

Nachfolgend ist die Erfindung anhand zweier Ausführungsbeispiele unter Bezugnahme auf die beigefügten Figuren beschrieben. Es zeigen:
- **Fig. 1:**: in einer schematisierten, zum Teil geschnittenen Darstellung einen in einem Rasthülsengehäuse geführten Rastbolzen gemäß einer ersten Ausführungsform,
- **Fig. 2:**: eine Ansicht der Anordnung der Figur 1 mit Blickrichtung auf die Spitze des Rastbolzens,
- **Fig. 3:**: den Rastbolzen der Figuren 1 und 2 in einer perspektivischen Darstellung,
- **Fig. 4:**: eine Ansicht eines Rastbolzens gemäß einer zweiten Ausführungsform
- **Fig. 5:**: eine zum Teil geschnittenen Darstellung einer Rastbolzen-Anordnung mit dem Rastbolzen der Figur 4
- **Fig. 6:**: einen Längsschnitt durch einie Rastbolzen-Anordnung ähnlich der in Figur 5, jedoch mit 4 Andruckarme 7n

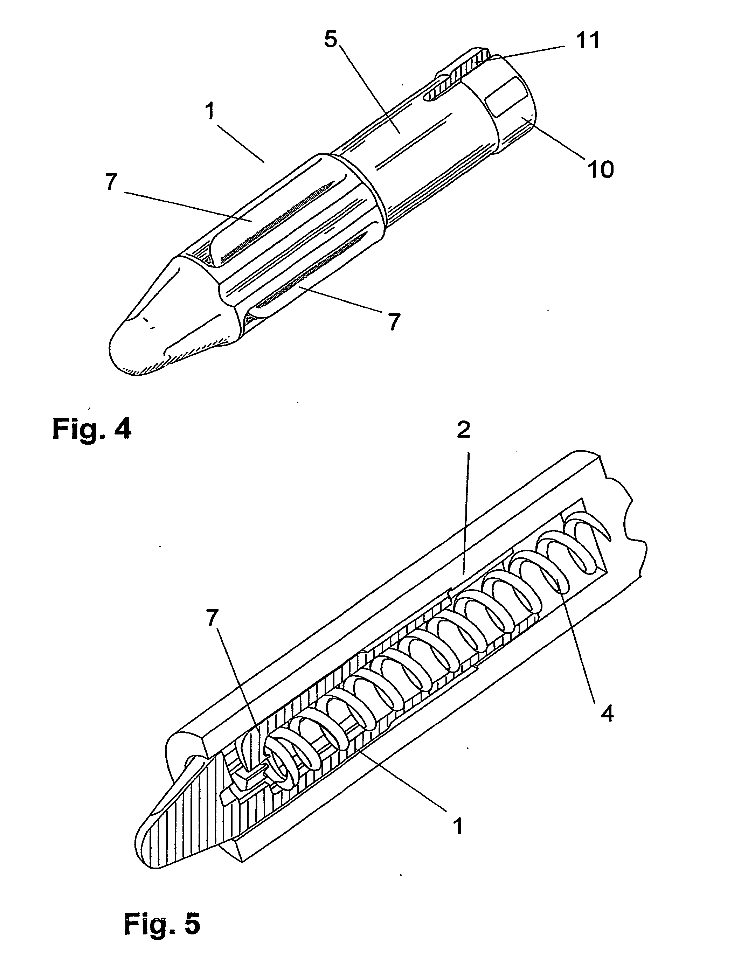

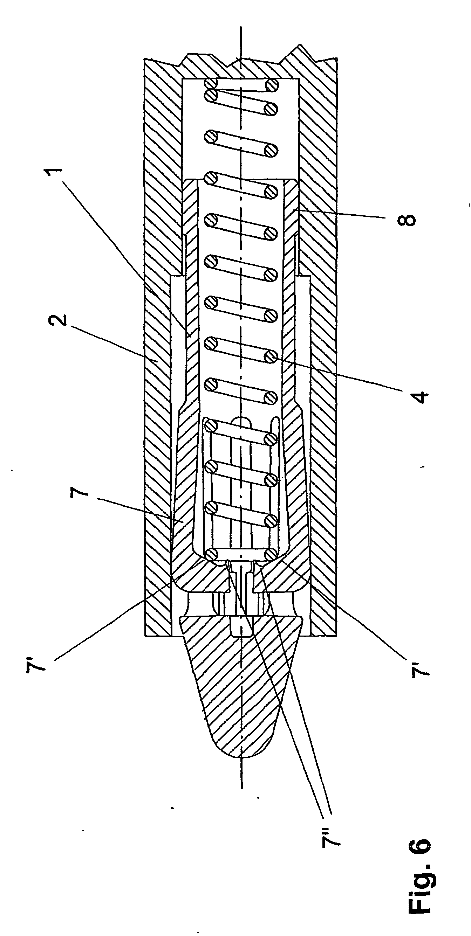

Ein Rastbolzen 1 ist, wie in Fig. 1 zu sehen, in einem Rastbolzengehäuse 2 längsverschieblich geführt. Zu diesem Zweck weist das Rastbolzengehäuse 2 einen Führungskanal 3 auf, in dem der Rastbolzen 1 beweglich gelagert ist. Der Rastbolzen 1 stützt sich über eine Rastfeder 4 am Fuße des Führungskanals 3 ab. Der Rastbolzen 1 umfaßt einen zylindrischen Schaft 5, dessen freies, aus dem Rasthülsengehäuse 2 herausragendes Ende zur Ausbildung einer Spitze 6 konisch verjüngt ist. Mit der Spitze 6 greift der Rastbolzen 1 in nicht dargestellter Art und Weise in die Schaltkulisse eines elektrischen Schalters ein.

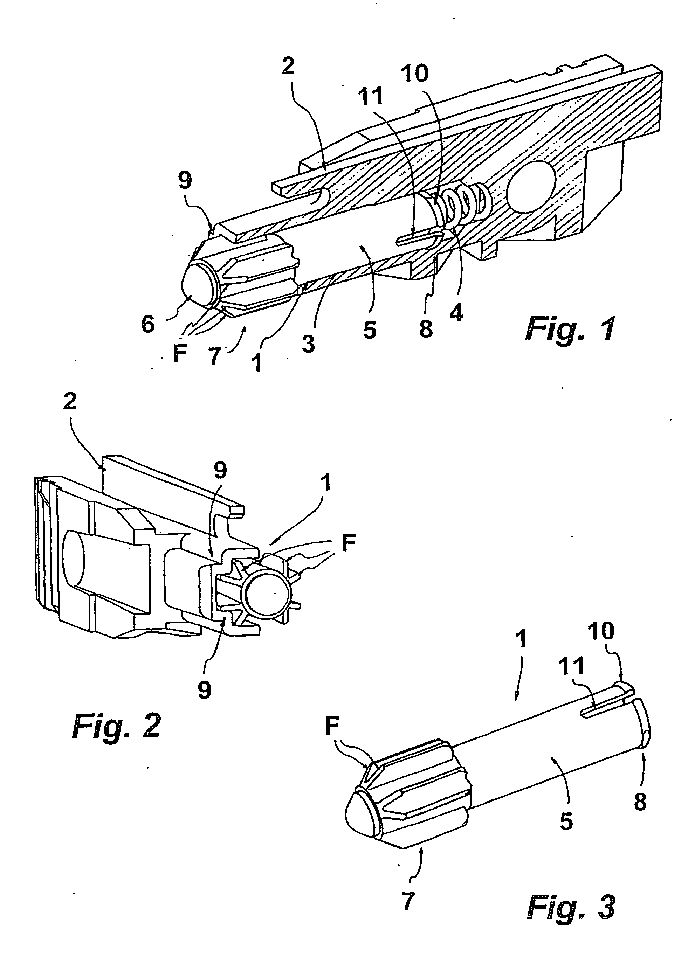

Der Rastbolzen 1 ist in dem Führungskanal 3 durch dem Rastbolzen 1 zugeordnete Führungsmittel 7 geführt. Die Führungsmittel 7 sind angeordnet im Bereich des Schaftes 5 in dem an die Spitze 6 grenzenden Abschnitt. An seinem spitzenfemen Ende ist der Rastbolzen 1 mit einem durch einen Wulst gebildeten weiteren Führungsabschnitt 8 versehen. Die Führungsmittel 7 sind gebildet durch von dem Schaft 5 nach außen hin abragende Führungsrippen F, wobei jeweils zwei Führungsrippen F zur Ausbildung eines Führungsrippenpaares im Bereich ihres Fußes V-förmig aneinander grenzen. Der Rastbolzen 1 und entsprechend auch die Führungsrippen F sind aus Kunststoff im Wege eines Spritzgußverfahrens hergestellt. Dabei ist ein solcher Kunststoff eingesetzt worden, der den Führungsrippen F biegeweiche und in einem gewissen Maße elastische Eigenschaften zukommen läßt. Die aus jeweils zwei Führungsrippen F gebildeten Führungsrippenpaare schließen jeweils einen in den Führungskanal 3 vorspringenden Vorsprung 9 des Rastbolzengehäuses 2 ein, wie dies aus der Ansicht der Figur 2 erkennbar ist. Die beiden Führungsrippen F eines Führungsrippenpaares liegen außenseitig an den einen Vorsprung 9 ausbildenden Wandabschnitten des Rastbolzengehäuses 2 an. Hergestellt werden die Führungsrippen F eines Führungsrippenpaares mit einer Ausgestaltung der V-förmigen Anordnung, dessen Öffnungswinkel geringfügig kleiner ist als der zum Anliegen an den den Vorsprung 9 bildenden Wandabschnitten des Rastbolzengehäuses 2 benötigte Winkelabstand. Aus diesem Grunde liegen die Führungsrippen F eines Führungsrippenpaares mit einer gewissen Vorspannung an diesen Abschnitten des Rastbolzengehäuses 2 an. Die endseitig gerundete Ausbildung der Führungsrippen F und das winklige Anordnen derselben zu den den Vorsprung 9 bildenden Wandabschnitten gewährleistet, daß die Führungsrippen F jeweils nur entlang einer Linie die einen solchen Vorsprung 9 ausbildenden Wandabschnitte kontaktieren. Durch diese Maßnahme ist nicht nur die Reibung minimiert, sondern durch Einschließen der Vorsprünge 9 in den beiden Führungsrippen F jeweils eines Führungsrippenpaares ist zugleich eine Verdrehsicherung des Rastbolzens 1 in dem Führungskanal 3 des Rastbolzengehäueses 2 realisiert.

Der hintere Führungsabschnitt 8 des Rastbolzens 1 ist gebildet durch einen am hinteren Abschluß des Schaftes 5 angeordneten umlaufenden Wulst 10 mit einer außenseitig gerundeten Oberfläche. Ferner ist der als Hohlkörper zur Aufnahme der Druckfeder 4 ausgebildete Schaft 5 im Bereich seines hinteren Abschnittes durch einen Schlitz 11 geschlitzt ausgebildet. Der Außendurchmesser des Wulstes 10 ist zweckmäßigerweise mit einem geringen Übermaß gegenüber der lichten Weite des Führungskanals 3 des Rastbolzengehäuses 2 in diesem Abschnitt vorgesehen. Durch Einbringen des Schlitzes 11 ist der hintere Abschnitt biegeweich und durch das Material mit gewissen elastischen Eigenschaften ausgestattet. Daher liegt die Außenseite des Wulstes 10 aufgrund seines gerundeten Äußeren entlang einer Linie an der Innenseite des Führungskanals 3 mit einer gewissen Vorspannung an. Der Rastbolzen 1 ist in dem Führungskanal 3 des Rastbotzengehäuses 2 somit spielfrei geführt.

Die in Fig. 4 bis 6 gezeigte alternative Rastbolzen-Anordnung umfaßt ebenfalls einen in einem Rastbolzengehäuse 2 geführten Rastbolzen 1. Die Führungsmittel 7 werden in diesem Fall durch sich parallel zum Rastbolzen 1 erstrekkende Andruckarme 7 gebildet. Die Andruckarme 7 sind jeweils über Verschwenkstellen mit dem Rastbolzen 1 beweglich verbunden.
Am spitzennahen Ende der Andruckarme 7 sind als Umlenkschrägen 7' ausgebildeten Umlenkelemente vorgesehen, auf die sich der eine Endbereich der Rastfeder 4 abstützt. Durch die Umlenkschrägen 7' wird ein Teil der von der Rastfeder 4 aufgebrachten, in axiale Richtung weisenden Andruckkraft in radiale Richtung umgelenkt; die Andruckarme 7 werden dadurch radial abgespreizt und liegen unter elastischer Vorspannung stehend an der Innenwandung eines etwas weiteren Abschnittes des Rastbolzengehäuses 2 an. Die radial wirkende Andruckkraft bzw. die daraus resultierende Reibungskraft kann durch Wahl des Anstellwinkels der Umlenkschräge 7' eingestellt werden.

Dadurch, daß das spitzenfeme Rastbolzenende bei der Montage zunächst in den mit einer Einführschräge versehenen, etwas weiteren Bereich des Rastbolzengehäuses 2 eingeführt wird, ist die Montage des Rastbolzens 1 weitgehend vereinfacht. Weiterhin sind an den Umlenkschrägen 7' Fanghaken 7" vorgesehen, welche die maximal mögliche Auslenkung der Andruckarme 7 begrenzen, so daß selbige bei der Montage des Rastbolzens 1 nicht durch eine zu große Auslenkung, welche etwa zu einer Materialermüdung führen kann, beschädigt werden.

In den Figuren 4 und 5 ist eine erfindungsgemäße Rastbolzen-Anordnung bzw. ein erfindungsgemäßer Rastbolzen 1 mit drei um 120 Winkelgrad versetzten Andruckarmen 7 dargestellt. Der Rastbolzen 1 wird vorzugsweise als ein einstückiges Kunststoff-Spritzgießteil hergestellt. Zwei der drei, durch fensterartige Ausschnitte in der Oberfläche des Rastbolzens 1 durchgreifenden Andruckarme 7 sind sichtbar. Des weiteren sind in der Darstellung auch die am spitzenfemen Ende des Rastbolzens 1 angeordneten elastischen Abschnitte sowie einer der Schlitze 11 erkennbar. Der Rastbolzen 1 ist in ein hohlzylindrisches Rastbolzengehäuse 2 eingebracht Das eine abgeflachte Ende der Rastfeder 4 stützt sich dabei auf die vorzugsweise im wesentlichen in einer Ebene liegenden Umlenkschrägen 7' ab, während das andere abgeflachte Ende der Rastfeder 4 sich auf der Stimfläche des Rastbolzengehäuses 2 abstützt.
Hinter der Verschwenkstelle weist die Mantelfläche des Rastbolzens 1 eine etwas dünnere Materialstärke auf. Zur Erleichterung der Verschwenkbewegung der Andruckarme 7 kann auch vorgesehen werden, im Bereich der Verschwenkstelle eine Materialeinschnürung einzubringen, so daß eine gelenkige Verbindung z.B. nach Art eines Filmschamiers entsteht. Prinzipiell ist es aber auch möglich, den Rastbolzen 1 mehrteilig auszubilden und die Andruckarme 7 mit dem Rastbolzen 1 beispielsweise durch eine gelenkige Achsverbindung zu verbinden.

Es können selbstverständlich -je nach Anwendungsfall - auch mehr als drei Andruckarme 7 am Rastbolzen 1 vorhanden sein. In Figur 6 ist eine weitere Ausführungsform eines erfindungsgemäßen Rastbolzens mit vier um 90 Winkelgrad versetzten Andruckarme 7n gezeigt. Das Zusammenwirken von Rastfeder 4 und Umlenkschrägen 7' ist dargestellt: das abgeflachte Ende der Rastfeder 4 liegt an den Umlenkschrägen 7' an und spreizt die Andruckarme 7 auseinander. Es kann alternativ auch vorgesehen sein, daß die Rastfeder 4 nicht unmittelbar auf die Umlenkschrägen 7' wirkt, sondern, daß ein starrer, separater Zwischenring (nicht dargestellt) zwischen dem spifizennahen Ende der Rastfeder 4 und den Umlenkschrägen 7' angeordnet ist, so daß sichergestellt ist, daß der Federdruck gleichmäßig auf die Andruckarme 7 verteilt wird. Weiterhin ist es vorteilhaft, zur Erleichterung der Montage am spitzenfemen Ende des Rastbolzens eine Einführschräge vorzusehen.

Der erfindungsgemäße Rastbolzen ist nicht nur zweckmäßig in seiner Herstellung, da dieser als Kunststoffspritzgußteil einstückig hergestellt werden kann, sondem kann ebenfalls in bereits vorhandene Rastbolzengehäuse eingesetzt werden, so daß dieser ohne weiteres vorbekannte Rastbolzen ersetzen kann.

## Patentansprüche

1. Schalteinrichtung mit einem in Richtung seiner Längserstreckung in einem Rastbolzengehäuse (2) beweglich gelagerten und durch eine Rastfeder (4) gegen eine Schaltkulisse unter axialer Vorspannung gehaltenen Rastbolzen (1), welcher mehrere über seinen Umfang verteilt angeordnete, außenseitig abragende und an der Innenseite des Rastbolzengehäuses (2) unter radialer Vorspannung anliegende Führungsmittel (7) aufweist, **dadurch gekennzeichnet, daß** die Führungsmittel (7) durch in Längserstreckung des Rastbolzens (1) ausgerichtete, biegeweiche Führungsrippen (F) gebildet sind, durch die der Rastbolzen (1) in seinem vorderen spitzennahen Bereich in dem Rastbolzengehäuse (2) geführt ist.

2. Schalteinrichtung nach Anspruch 1, **dadurch gekennzeichnet, daß** mehrere Führungsrippenpaare vorgesehen sind, die jeweils in gleichem Winkelabstand zueinander angeordnet sind.

3. Schalteinrichtung nach Anspruch 2, **dadurch gekennzeichnet, daß** der Außendurchmesser der die Führungsrippen (F) einschließenden Mantelfläche des Rastbolzens (1) mit geringem Übermaß größer ist als die lichte Innenweite des Rastbolzengehäuses (2).

4. Schalteinrichtung nach einem der Ansprüche 1 bis 3, **dadurch gekennzeichnet, daß** der Rastbolzen (1) durch die Führungsrippen (F) in dem Rastbolzengehäuse (2) verdrehsicher geführt ist.

5. Schalteinrichtung nach Anspruch 4 in seinem Rückbezug auf Anspruch 2, **dadurch gekennzeichnet, daß** das Rastbolzengehäuse (2) Führungsvorsprünge (9) aufweist, an denen jeweils die beiden Führungsrippen (F) eines Führungsrippenpaares anliegen.

6. Schalteinrichtung mit einem in Richtung seiner Längserstreckung in einem Rastbolzengehäuse (2) beweglich gelagerten und durch eine Rastfeder (4) gegen eine Schaltkulisse unter axialer Vorspannung gehaltenen Rastbolzen (1), welcher mehrere über seinen Umfang verteilt angeordnete, außenseitig abragende und an der Innenseite des Rastbolzengehäuses (2) unter radialer Vorspannung anliegende Führungsmittel (7) aufweist, **dadurch gekennzeichnet, daß** die Führungsmittel (7) durch hebelartig ausgebildete, in Längserstreckung des Rastbolzens (1) ausgerichtete, bewegliche Andruckarme (7) gebildet sind, an denen jeweils ein Umlenkelement (7') vorhanden ist, welches so mit der Rastfeder (4) zusammenwirkt, daß der jeweilige Andruckarm (7) in radialer Richtung gegen die Innenseite des Rastbolzengehäuses (2) gedrückt ist.

7. Schalteinrichtung nach Anspruch 6, **dadurch gekennzeichnet, daß** die Andruckarme (7) im spitzennahen Bereich des Rastbolzens (1) angeordnet sind und sich parallel zur Längserstreckung des Rastbolzens (1) erstrecken.

8. Schalteinrichtung nach Anspruch 7, **dadurch gekennzeichnet, daß** das Umlenkelement jeweils am spitzennahen Ende des jeweiligen Andruckarme (7) als Umlenkschräge (7') ausgebildet ist und daß der Andruckarm (7) an seinem spitzenfemen Ende mit dem Rastbolzen (4) beweglich verbunden ist.

9. Schalteinrichtung nach Anspruch 8, **dadurch gekennzeichnet, daß** die Umlenkschräge (7') an ihrem zur Mittelachse des Rastbolzens (1) weisenden Ende mit einem die radiale Auslenkung des jeweiligen Andruckarme (7) begrenzenden Anschlaghaken (7") versehen ist.

10. Schalteinrichtung nach einem der Ansprüche 8 oder 9, **dadurch gekennzeichnet, daß** der Anstellwinkel der Umlenkschräge (7') etwa 30 Winkelgrad beträgt.

11. Schalteinrichtung nach einem der Ansprüche 8 bis 10, **dadurch gekennzeichnet, daß** zwischen dem spitzennahen Ende der Rastfeder (4) und den Umlenkschrägen (7') ein starrer Zwischenkörper, insbesondere ein Zwischenring, vorgesehen ist, durch welchen die Andruckkraft der Rastfeder (4) im wesentlichen gleichmäßig auf die Andruckarme (7) verteilt wird.

12. Schalteinrichtung nach einem der Ansprüche 1 bis 11, **dadurch gekennzeichnet, daß** die Führungsmittel (7) in gleichem Winkelabstand zueinander angeordnet sind.

13. Schalteinrichtung nach einem der Ansprüche 1 bis 12, **dadurch gekennzeichnet, daß** der Schaft (5) des Rastbolzens (1) zusammen mit den Führungsmitteln (7) aus einem Kunststoff, zweckmäßiger Weise im Wege eines Spritzgußverfahrens hergestellt ist.

14. Schalteinrichtung nach einem der Ansprüche 1 bis 13, **dadurch gekennzeichnet, daß** durch die Führungsmittel (7) ein erster Führungsabschnitt im spitzennahen Bereich des Rastbolzens (1) gebildet ist und daß im Bereich des hinteren Endes des Rastbolzens (1) ein weiterer von dem ersten Führungsabschnitt beabstandeter Führungsabschnitt (8) angeordnet ist.

15. Schalteinrichtung nach Anspruch 14, **dadurch gekennzeichnet, daß** der hintere Führungsabschnitt (8) durch einen den Schaft (5) umgebenden Wulst (10) gebildet ist.

16. Schalteinrichtung nach Anspruch 15, **dadurch gekennzeichnet, daß** der Wulst (10) außenseitig gerundet ist.

17. Schalteinrichtung nach Anspruch 15 oder 16, **dadurch gekennzeichnet, daß** das hintere Ende des Schaftes (5) mit dem als Führungsmittel (8) dienenden Wulst (10) mit einem Schlitz (11) versehen ist.

## Claims

1. Switchgear with an indexing pin (1) that is moveably supported in an indexing pin sheath (2) in the direction of its longitudinal extent and held under axial prestress against a gear shifting gate by means of a locating spring (4), with the indexing pin (1) having several guiding aids (7) that are arranged distributed over its circumference projecting outwards and that lie close to the inside of the indexing pin sheath under radial prestress, **characterised by** the fact that the guiding aids (7) which are formed by pliable guide ribs (F) aligned in the longitudinal direction of the indexing pin (1) through which the front area of the indexing pin (1) close to its tip is guided in the indexing pin sheath (2).

2. Switchgear in accordance with Claim 1, **characterised by** the fact that several pairs of guide ribs are provided that are arranged at an equal angular distance to each other, respectively.

3. Switchgear in accordance with Claim 2, **characterised by** the fact that the outside diameter of the surface area of the indexing pin (1) encompassing the guide ribs (F) is greater that the clearance width of the indexing pin sheath (2) with a slight over-dimension.

4. Switchgear in accordance with any of Claims 1 to 3, **characterised by** the fact that the indexing pin (1) is guided in the indexing pin sheath (2) in a torsion-resistant manner by means of the guide ribs (F).

5. Switchgear in accordance with Claim 4 in its relation to Claim 2, **characterised by** the fact that the indexing pin sheath (2) features guide projections on which each of the two guide ribs (F) of a pair of guide ribs lie closely.

6. Switchgear with an indexing pin (1) that is moveably supported in an indexing pin sheath (2) in the direction of its longitudinal extent and held under axial prestress against a gear shifting gate by means of a locating spring (4), with the indexing pin (1) having several guiding aids (7) that are arranged distributed over its circumference projecting outwards and that lie close to the inside of the indexing pin sheath under radial prestress, **characterised by** the fact that the guiding aids (7) are formed by moveable press-on arms (7) of a lever-like design that are aligned to the longitudinal extent of the indexing pin (1) with each of the press-on arms (7) provided with a deflection element (7') that cooperates with the locating spring (4) in such a manner that the respective press-on arm (7) is pressed against the inside of the indexing pin sheath (2) in the radial direction.

7. Switchgear in accordance with Claim 6, **characterised by** the fact that the press-on arms (7) are arranged in the area close to the tip of the indexing pin (1) and extend parallel to the longitudinal span of the indexing pin (1).

8. Switchgear in accordance with Claim 7, **characterised by** the fact that the deflection element is shaped as a deflecting bevel (7') on the end of each of the respective press-on arms (7) close to the tip and that the press-on arm (7) is moveably connected to the indexing pin (1) at its end furthest from the tip.

9. Switchgear in accordance with Claim 8, **characterised by** the fact that, on its end pointing towards the centre line of the indexing pin (1), the deflecting bevel (7') is provided with a catch hook (7") that limits the radial excursion of the respective press-on arms (7).

10. Switchgear in accordance with either of Claims 8 or 9, **characterised by** the fact that the setting angle of the deflecting bevel (7') is about 30 angular degrees.

11. Switchgear in accordance with any of Claims 8 to 10, **characterised by** the fact that between the end of the catch spring (4) close to the tip and the deflecting bevels (7') there is a rigid intermediate element, in particular an intermediate ring, by means of which the pressure force of the catch spring (4) is distributed on the press-on arms (7) in an essentially uniform manner.

12. Switchgear in accordance with any of Claims 1 to 11, **characterised by** the fact that the guiding aids (7) are arranged at an equal angular distance to each other.

13. Switchgear in accordance with any of Claims 1 to 12, **characterised by** the fact that the shaft (5) of the indexing pin (1) together with the guiding aids (7) is made of a plastic, expediently by way of an injection moulding process.

14. Switchgear in accordance with any of Claims 1 to 13, **characterised by** the fact that a first guide section is formed by the guiding aids (7) in the area of the indexing pin (1) close to the tip and that a further guide section (8) is arranged at a distance from the first guide section in the vicinity of the rear end of the indexing pin (1).

15. Switchgear in accordance with Claim 14, **characterised by** the fact that the rear guide section (8) is formed by a bead (10) encompassing the shaft (5).

16. Switchgear in accordance with Claim 15, **characterised by** the fact that the bead (10) is rounded on its exterior.

17. Switchgear in accordance with either of Claims 15 or 16, **characterised by** the fact that the rear end of the shaft (5) with the bead (10) serving as a guiding aid (8) is provided with a slit (11).

## Revendications

1. Dispositif de commutation avec un boulon d'arrêt (1) qui, monté, mobile dans sa direction longitudinale, dans un boîtier (2) de boulon d'arrêt, et retenu sous précontrainte axiale par un ressort d'arrêt (4) contre une coulisse de commutation, présente plusieurs organes de guidage (7) qui, répartis sur sa surface périphérique, font saillie vers l'extérieur et portent, sous précontrainte radiale, contre la surface intérieure du boîtier (2) de boulon d'arrêt, **caractérisé en ce que** les organes de guidage (7) sont formés par des nervures de guidage (F) flexibles, orientées dans la direction longitudinale du boulon d'arrêt (1), au moyen desquelles ledit boulon d'arrêt (1) est guidé par sa zone antérieure, proche de la pointe, dans le boîtier (2) de boulon d'arrêt.

2. Dispositif de commutation selon la revendication 1, **caractérisé en ce que** plusieurs couples de nervures de guidage sont prévue, lesquels sont disposés chacun au même intervalle angulaire, les uns par rapport aux autres.

3. Dispositif de commutation selon la revendication 2, **caractérisé en ce que** le diamètre extérieur de la surface du manteau du boulon d'arrêt (1), entourant les nervures de guidage (F), est légèrement plus grand que le diamètre intérieur du boîtier (2) du boulon d'arrêt.

4. Dispositif de commutation selon l'une des revendications 1 à 3, **caractérisé en ce que** le boulon d'arrêt (1) est guidé, protégé de manière fiable contre les contournements, par les nervures de guidage (F), dans le boîtier (2) de boulon d'arrêt.

5. Dispositif de commutation selon la revendication 4 se référant à la revendication 2, **caractérisé en ce que** le boîtier (2) de boulon d'arrêt présente des saillies de guidage (9), contre chacune desquelles viennent porter les deux nervures de guidage (F) d'un couple de nervures de guidage.

6. Dispositif de commutation avec un boulon d'arrêt (1) qui, monté, mobile dans sa direction longitudinale, dans un boîtier (2) de boulon d'arrêt, et retenu sous précontrainte axiale par un ressort d'arrêt (4) contre une coulisse de commutation, présente plusieurs organes de guidage (7) qui, répartis sur sa surface périphérique, font saillie vers l'extérieur et portent, sous précontrainte radiale, contre la surface intérieure du boîtier (2) de boulon d'arrêt, **caractérisé en ce que** les organes de guidage (7) sont formés par des bras de pression (7) mobiles, conçus à la manière de leviers, orientés dans la direction longitudinale du boulon d'arrêt (1), à chacun desquels est prévu un élément de déviation (7') qui coopère avec un ressort d'arrêt (4) de telle manière que chaque bras de pression (7) est pressé, dans la direction radiale, contre la surface intérieure du boîtier (2) de boulon d'arrêt.

7. Dispositif de commutation selon la revendication 6, **caractérisé en ce que** les bras de pression (7) sont disposés dans la section du boulon d'arrêt (1) voisine de la pointe, et s'étendent parallèlement à la direction longitudinale du boulon d'arrêt (1).

8. Dispositif de commutation selon la revendication 7, **caractérisé en ce que** l'élément de déviation est conçu, à l'extrémité de chaque bras de pression (7), proche de la pointe, en tant que biseau de déviation (7'), et que le bras de pression (7) est relié, mobile, à son extrémité éloignée de la pointe, au boulon d'arrêt (4).

9. Dispositif de commutation selon la revendication 8, **caractérisé en ce que** le biseau de déviation (7') est pourvu, à son extrémité dirigée vers l'axe médian du boulon d'arrêt (1), d'un crochet de butée (7") qui limite la déviation radiale du bras de pression (7) respectif.

10. Dispositif de commutation selon l'une des revendications 8 ou 9, **caractérisé en ce que** l'angle de réglage du biseau de déviation (7') est de 30° environ.

11. Dispositif de commutation selon l'une des revendications 8 à 10, **caractérisé en ce que**, entre l'extrémité du ressort d'arrêt (4), proche de la pointe, et les biseaux de déviation (7'), un corps intercalaire rigide , notamment un anneau intermédiaire, est prévu, au moyen duquel la force de pression du ressort d'arrêt (4) est répartie de manière sensiblement uniforme sur les bras de pression (7).

12. Dispositif de commutation selon l'une des revendications 1 à 11, **caractérisé en ce que** les organes de guidage (7) sont disposés avec le même intervalle angulaire les uns par rapport aux autres.

13. Dispositif de commutation selon l'une des revendications 1 à 12, **caractérisé en ce que** la tige (5) du boulon d'arrêt (1) est fabriquée, en commun avec les organes de guidage (7), en matière plastique, opportunément selon le procédé de moulage par injection.

14. Dispositif de commutation selon l'une des revendications 1 à 13, **caractérisé en ce que**, par les organes de guidage (7), une première section de guidage est formée dans la zone proche de la pointe du boulon d'arrêt (1), et que, dans la zone de l'extrémité arrière du boulon d'arrêt (1), une autre section de guidage (8) est disposée à distance de la première section de guidage.

15. Dispositif de commutation selon la revendication 14, **caractérisé en ce que** la section de guidage arrière (8) est formée par un renflement (10) qui entoure la tige (5).

16. Dispositif de commutation selon la revendication 15, **caractérisé en ce que** le renflement (10) est arrondi vers l'extérieur.

17. Dispositif de commutation selon la revendication 15 ou 16, **caractérisé en ce que** l'extrémité arrière de la tige (5), avec le renflement (10) servant d'organe de guidage (8), est pourvue d'une fente (11).
